# EUROPÄISCHE PATENTSCHRIFT

(11) **EP 1 974 617 B1**
(45) Veröffentlichungstag und Bekanntmachung des Hinweises auf die Patenterteilung: **19.05.2010**
(21) Anmeldenummer: 08153241.8
(22) Anmeldetag: 25.03.2008
(51) Int. Cl.: A23L 1/314, A23L 1/317

(54) **Verfahren zur Herstellung abgepackter und geräuchterter streichfähiger Rohwürste**
Method for manufacturing packaged and smoked spreadable raw sausage
Procédé de fabrication de saucisses crues à tartiner emballées et fumées

(30) Priorität: 30.03.2007 DE 102007015816
(43) Veröffentlichungstag der Anmeldung: 01.10.2008
(73) Patentinhaber: Böklunder Plumrose GmbH & Co. KG, 24680 Böklund (DE)
(72) Erfinder: Bergt, Jörg, 49214 Bad Rothenfelde (DE); Neukum, Gerhard, 24966 Sörup (DE)
(74) Vertreter: Raffay & Fleck

(56) Entgegenhaltungen:
- DE-A1- 3 104 131
- DE-A1- 4 104 710
- DE-A1-102004 002 380

## Beschreibung

Die Erfindung betrifft ein Verfahren zur Herstellung abgepackter und geräucherter streichfähiger Rohwürste, insbesondere geräucherter Teewurst, mit den Schritten Anmischen einer zerkleinerten Rohmasse und Fermentation der zerkleinerten Rohmasse, unter Anwesenheit von Rauch.

Zur Herstellung von streichfähiger Rohwurst, das heißt von fermentierter, also gereifter und haltbar gemachter Rohwurst, sind Verfahren bekannt, bei denen eine Rohmasse, unter anderem beinhaltend zerkleinerte und/oder homogenisierte Fleisch- und/oder Speckmischungen und meist Starter- und/oder Schutzkulturen, in endportionierten Wurstdärmen in einem Schritt fermentiert, und dabei häufig auch zugleich geräuchert wird.

Darüber hinaus ist aus der DE 10 2004 002 380 B4 ein Verfahren bekannt, bei dem eine Rohmasse in großen Behältern, insbesondere Edelstahlgefäßen mit einem Fassungsvermögen von etwa 200 kg Rohmasse, ohne Anwesenheit von Rauch in einem Schritt fermentiert und nach abgeschlossener Fermentierung zur Aufbrechung von Eiweißagglomeraten nochmals zerkleinert und anschließend endportioniert verpackt wird.

Die bekannten Verfahren weisen Nachteile auf. So kann bei Verwendung von großen, insbesondere aus Edelstahl gefertigten, Gefäßen zur Fermentierung während dieses Vorgangs keine erfolgreiche Räucherung durchgeführt werden und es kommt zu einer Agglomeration der durch die vollständige Fermentierung denaturierten Eiweiße, die durch einen zusätzlichen Zerkleinerungsschritt wieder aufgebrochen werden muss.

Dokument DE 3 104 131 offenbart ein Verfahren zum Herstellen von kaltgerauchten, streichbaren Mettwürsten.

Dagegen besteht bei der Fermentierung und/oder Räucherung in endportionierten Wurstdärmen die Gefahr, dass insbesondere bei der Verwendung einer mageren Ausgangsmasse im Verlaufe der Fermentierung durch die damit verbundene Absenkung des pH-Wertes in der Wurstmasse enthaltene Eiweiße unumkehrbar denaturieren und agglomerieren und so die Streichfähigkeit leidet bzw. verloren geht.

Somit ist es Aufgabe dieser Erfindung, ein Verfahren zur Herstellung abgepackter und geräucherter, streichfähiger Rohwürste anzugeben, das die Herstellung von während einer Fermentierung geräucherter streichfähiger Rohwurst ermöglicht, bei der eine unerwünschte Ausbildung einer Eiweißmatrix (agglomeriertes Eiweiß) verhindert werden kann und die dennoch eine gute Haltbarkeit aufweist.

Diese Aufgabe wird gelöst durch ein Verfahren gemäß Anspruch 1. Weitere vorteilhafte Weiterbildungen sind in den abhängigen Ansprüchen 2 bis 8 beschrieben.

Gemäß Anspruch 1 enthält ein erfindungsgemäßes Verfahren die Schritte:
a. Anmischen einer zerkleinerten Rohmasse,
b. Abfüllen der Rohmasse in räucherfähige Behältnisse,
c. Fermentation der abgefüllten Rohmasse, unter zumindest zeitweiser Gegenwart von Rauch in einer ersten Stufe,
d. Entfernen der Masse aus den räucherfähigen Behältnissen und Zumischen von Starter- und/oder Schutzkulturen,
e. Abpacken der Masse in Verkaufsverpackungen,
f. Fermentation der Masse in den Verkaufsverpackungen in einer zweiten Stufe bis zu einem fertigen Fermentationsgrad.

Dieses Verfahren bietet den Vorteil, dass eine Räucherung während der Fermentation ermöglicht wird, ohne hierdurch eine Agglomeration der in der Rohmasse enthaltenen Eiweiße und damit eine Verminderung oder gar einen Verlust der Streichfähigkeit hinnehmen zu müssen. Wesentlich hierfür ist die erfindungsgemäße Aufteilung des Fermentationsvorganges in zwei Stufen. So wird der Fermentationsvorgang nach ausreichender Räucherung nicht zu Ende geführt, sondern gezielt unterbrochen und erst in einer zweiten Stufe unter Ausnutzung der nach der ersten Fermentierungsstufe zugegebenen Starter- und/oder Schutzkulturen in der Endverpackung weiter- und zu Ende geführt. Es bleibt daher die Möglichkeit, Farbe, Geruch, Geschmack sowie Textur durch den während der ersten Stufe der Fermentation durchgeführten Räuchervorgang sensorisch vorteilhaft zu beeinflussen.

Die Fermentation wird allerdings nicht so weit geführt, dass es in diesem Schritt bereits zu einer Agglomeration der in der Masse enthaltenen Eiweiße zu einer unerwünschten Matrix kommt. Erst in einem zweiten Schritt wird dann durch Zugabe von Starter- und/oder Schutzkulturen und nach dem verkaufsfertigen Abpacken die Fermentation zu Ende geführt. Mit anderen Worten kann die Agglomeration von durch Absenkung des pH-Wertes denaturierten Eiweißen in der ersten Fermentationsstufe (Schritt c.) vermieden werden, indem die pH-Wertabsenkung im ersten Fermentationsschritt (Schritt c.) gering gehalten und erst anschließend in Stufe zwei (Schritt f.) zum endgültigen Haltbarmachen weiter abgesenkt wird.

Die Zugabe von Schutzkulturen ist insbesondere hilfreich, um eventuellen Mikroeinschlüssen von Luft entgegenzuwirken, die sich ansonsten negativ auf die Produktqualität und -haltbarkeit auswirken könnten.

Nach dem Abbruch der ersten Fermentationsstufe, also nach Schritt c. bzw. in Schritt d. können gegebenenfalls anstelle der oder zusätzlich zu den Schutzkulturen auch Starterkulturen zugegeben werden. Eine solche häufig nach Einsatz von Starterkulturen schon zu Beginn (Beimengung in der Ausgangsmasse) erneut durchgeführte Zugabe von Starterkulturen kann der weiteren Beförderung der Fermentation dienlich sein, insbesondere dann, wenn die Wurst in den Verkaufsverpackungen, z.B. mit einem Deckel verschlossenen Kunststoffschalen, nicht mehr in einer solchen Weise atmen kann, wie sie für eine Fermentation an sich wünschenswert wäre.

Bevorzugt erfolgt in der ersten Stufe der Fermentation (Schritt c.) eine Absenkung des pH-Wertes der Masse auf einen Wert 5,2 ≤ pH ≤ 4,7 (Anspruch 2).

Grundsätzlich sind bei dem erfindungsgemäßen Verfahren unterschiedliche Vorgehensweisen möglich, die sich in der Dauer der Fermentation im ersten Fermentationsschritt unterscheiden.

Es hat sich dabei herausgestellt, dass eine erste, kürzere Variante (vergleiche Anspruch 3) einen frühest möglichen Abschluss (Abbruch) der ersten Fermentationsstufe am 6. Tag der Reifung (gerechnet wird der Tag des Abfüllens in die Fermentationsbehältnisse und damit der Start der Fermentation als 0. Tag) ermöglicht. Hierbei sollte der pH-Wert nach Möglichkeit ≤ 5,2 betragen. Durch Einhaltung dieses Parameters ist auf jeden Fall sichergestellt, dass mit der erforderlichen Zuverlässigkeit eine hinreichende Reifung bezüglich Geschmack, Konsistenz, Farbe und Aroma erzielt wird.

Wird hingegen eine längere Variante (vergleiche Anspruch 4) gewählt, so ist die Dauer der Fermentation in der ersten Stufe ebenfalls beschränkt. Diese sollte spätestens am 10. Tag (gerechnet ab dem 0. Tag der Abfüllung in die Fermentationsbehältnisse) vorgenommen werden, wobei der Säuerungsgrad hier nicht unter pH 4,7 abfallen darf. Bei einem geringeren pH-Wert am Ende der ersten Fermentationsstufe besteht ansonsten ein zu hohes Risiko einer unerwünschten Aufhellung bzw. eines Verblassens des Produkts sowie das Risiko von Schlierenbildung. Auch wird das Produkt dann möglicherweise im Geschmack zu sauer.

Auch wenn die oben beschriebenen Varianten getrennt dargestellt worden sind, können diese in einem einzigen Herstellungsvorgang integriert werden. So kann z.B. eine große Menge an mit der Rohwurst gefüllten, im Wesentlichen zeitgleich abgepackten, räucherfähigen Behältnisse in der ersten Fermentationsstufe reifen, die dann nach und nach (z.B. zwischen dem 6. und dem 10. Tag) der ersten Fermentationsstufe entnommen, in die Verkaufsverpackungen umgepackt und anschließend in der zweiten Fermentationsstufe fertig reifen gelassen werden.

Gemäß Anspruch 5 können als für die zweite Stufe der Fermentation zugesetzte Schutzkulturen kaltwachsende Schutzkulturen gewählt werden, die auch bei unter 10°C, insbesondere auch unter 7°C aktiv sind. Diese werden dem Brät zugegeben und die Mischung dann verkaufsfertig verpackt und bei unter 10°C, insbesondere unter 7°C, gelagert. Während dieser Lagerung fermentiert das Produkt weiter und zu Ende, wobei dieser Schritt durchaus einige Tage dauern kann. Durch die Wahl der Temperatur kann die Geschwindigkeit der Fermentation beeinflusst werden, so dass hiermit auch die Dauer des Herstellungsverfahrens verändert werden kann.

Nach dem Zusetzen von Schutzkulturen, die auch bei den genannten niedrigen Temperaturen aktiv sind, und portioniertem Abpacken der streichfähigen Rohwurst fermentiert das Produkt in seiner Verpackung im Kühllager weiter. Hierdurch ist eine verlängerte Haltbarkeit bei Erhalt der Streichfähigkeit erreichbar.

Bekanntermaßen bilden bei einer sehr fetthaltigen Ausgangsmasse die Fettbestandteile Schutzhüllen um die Eiweiße und verhindern so auch bei einer starken Absenkung des pH-Wertes durch die Fermentation die Verklumpung der Eiweiße. Sofern der Fettgehalt der Ausgangsmasse zur Erreichung dieses Effektes nicht ausreichend hoch ist, kann der bereits in der ersten Stufe (teil-)fermentierten Masse bei der Zugabe der Schutzkulturen auch ein Fett oder ein Öl zugegeben werden, um eine Agglomeration von durch eine weitere Absenkung des pH-Wertes denaturierten Eiweißen auch nach der zweiten Stufe der Fermentation zu verhindern und so die Streichfähigkeit sicher zu stellen (vergleiche Anspruch 7).

Vorteilhafterweise werden in Schritt b. als Behältnisse gemäß Anspruch 8 Faserdärme verwendet. Diese sind für eine Räucherung besonders geeignet.

Eine Agglomeration von denaturierten Eiweißen in der Masse wird, wie oben bereits geschildert, besonders gut vermieden, wenn wie gemäß Anspruch 9 vorgesehen eine Ausgangsmasse mit einem Fettgehalt von wenigstens 25 Gew.-% gewählt wird.

Weitere Vorteile und Merkmale der Erfindung ergeben sich aus der nachfolgenden Beschreibung von nicht beschränkenden Ausführungsbeispielen.

Zu Beginn der Herstellung wird ein praxisübliches Herstellungsverfahren für streichfähige Rohwürste verwendet. Insbesondere wird dabei eine übliche Rezeptur für die Rohmasse verwendet. Beispielsweise kann eine Zusammensetzung von 15 kg Saufleisch (45 Gew.-% Fett), 30 kg Saubauch (25 Gew.-% Fett), 251 kg Saubauch für Teewurst (25 Gew.-% Fett), 300 g Starterkulturen, z.B. die unter der Bezeichnung SM 206 von der Firma Chr. Hansen GmbH aus Nienburg, Deutschland, gehandelten Kulturen, 2,56 kg Teewurstgewürz oder Paprika, 320 g Pfefferschrot, 490 g gemahlener Pfeffer und 8,75 kg Pökelsalz verwendet werden. Diese Zusammensetzung wird gekuttert. Die gekutterte Rohmasse wird dann in räucherfähige Behältnisse, hier in Faserdärme, abgefüllt und in eine Räucherkammer verbracht. In der Räucherkammer verbleiben die Würste bei einer Temperatur von 20°C bis 24°C zumindest etwa drei Tage. Der Räuchervorgang ist in mehrere Phasen der Räucherung und Frischluftzufuhr unterteilt. Dabei erleidet die Masse einen Gewichtsverlust von etwa 4%. Der pH-Wert wird auf etwa 5,2 abgesenkt. Anschließend wird die Fermentation unterbrochen, der Brät aus den Därmen entnommen. Diesem Brät werden dann kaltwachsende Schutzkulturen, die dem Fachmann bekannt sind, beigemischt. Diese Schutzkulturen können z.B. die von der Firma Chr. Hansen GmbH unter der Bezeichnung BLC-48 Save Pro angebotenen Kulturen sein. Neben den Schutzkulturen können in dieser Phase weitere Kulturen zugesetzt werden, z.B. die von der Firma Chr. Hansen GmbH unter der Bezeichnung CP 77 Baktoferm gehandelten Starterkulturen. Zusätzlich wird in diesem Schritt der Masse Sonnenblumenöl (bei der hier genannten Rezeptur 17 kg) zugegeben. Das so gewonnene Gemisch wird dann endportioniert abgepackt.

Während oder auch nach der Zugabe der Schutzkulturen und des Öls kann die Masse noch einmal durchmischt werden, um die Schutzkulturen gleichmäßig zu verteilen. Mit einem solchen Mischvorgang kann auch ein nach dem Räuchern gegebenenfalls ungleichmäßig über das Brät verteilter Rauchgeschmack homogenisiert werden.

Anschließend wird das Produkt zehn Tage bei unter 7°C gelagert, wobei es zu Ende reift und die gewünschte Farbe erzielt. Dabei wird der pH-Wert durch Milchsäurebildung auf etwa 4,9 weiter abgesenkt und der Geschmack verbessert. Im Anschluss wird das durch diesen abschließenden Vorgang besonders haltbar gemachte Produkt ausgeliefert.

So ist die Herstellung einer lang haltbaren, sehr streichzarten, geräucherten Rohwurst mit außergewöhnlichem Geschmack möglich. Insbesondere durch die Unterteilung der Fermentation in zwei Stufen wird einerseits der gewünschte Rauchgeschmack erhalten, andererseits allerdings eine Agglomeration denaturierter Eiweiße vermieden und die Streichfähigkeit erhalten.

Neben der oben angegebenen Rezeptur mit den Ausgangsstoffen und deren Mengenangaben, können weitere Rezepturen Verwendung finden.

So werden z.B. für eine feine, fettarme Teewurst folgende Mengen verwendet:

| | |
|---|---|
| Sau-Schulter entsehnt (10 Gew.-% Fett) | 100 kg |
| Sau-Bauch (25 Gew.-% Fett) | 193 kg |
| Starterkulturen (SM 206, Chr. Hansen GmbH) | 450 g |
| Teewurstgewürz | 2,72 kg |
| Pökelsalz | 7,46 kg |
| Sonnenblumenöl (zugegeben vor dem 2. Fermentationsschritt) | 16 kg |

Für eine grobe Teewurst können folgende Ausgangsstoffe in den angegebenen Beimengungen verwendet werden:

| | |
|---|---|
| Saufleisch (45 Gew.-% Fett) | 15 kg |
| Sau-Bauch entspeckt (25 Gew.-% Fett) | 281 kg |
| Starterkulturen (SM 206, Chr. Hansen GmbH) | 300 g |
| Teewurstgewürz | 2,56 kg |
| Pfefferschrot | 320 g |
| gemahlener Pfeffer | 490 g |
| Pökelsalz | 8,75 kg |
| Sonnenblumenöl (zugegeben vor dem 2. Fermentationsschritt) | 16 kg |

Für eine feine Teewurst schließlich können folgende Zutaten verwendet werden:

| | |
|---|---|
| Sau-Bauch (25 Gew.-% Fett) | 240 kg |
| Deckelfett (80 Gew.-% Fett) | 80 kg |
| Teewurstgewürz | 2,72 kg |
| Starterkulturen (SM 206, Chr. Hansen GmbH) | 30 g |
| Pökelsalz | 8,75 kg |

Für alle drei oben zuletzt angegebenen Rezepturen erfolgt die Herstellung der fertigen Wurst in einem zweistufigen Reifungsverfahren wie oben beschrieben, wobei die in einem ersten Schritt in Fermentationsbehältnissen, z.B. Därmen, bereits teilgereifte Rohmasse aus diesen Behältnissen entnommen, mit Schutzkulturen versehen und anschließend in den Verkaufsverpackungen weiter reifen gelassen wird. Die Dauer der Reifung in der ersten Fermentationsstufe kann dabei abhängig vom gewünschten Ergebnis gewählt werden, wobei insbesondere auf den nach dieser Fermentationsstufe erreichten pH-Wert der Masse zu achten ist. Vor dem Abpacken in die Verkaufsverpackungen wird im Falle der beiden erstgenannten Rezepturen Sonnenblumenöl beigemengt. Im Falle des dritt genannten Rezeptes ist der Fettgehalt der Rohmasse hoch genug, eine weitere Zugabe von Öl nicht erforderlich.

Die Parameter des Fermentierungsprozesses können vom Fachmann wunschgemäß angepasst werden. Neben der genannten Rezeptur sind auch andere denkbar.

## Patentansprüche

1. Verfahren zur Herstellung abgepackter und geräucherter streichfähiger Rohwürste, insbesondere geräucherter Teewurst, mit folgenden Schritten:
a. Anmischen einer zerkleinerten Rohmasse,
b. Abfüllen der Rohmasse in räucherfähige Behältnisse,
c. Fermentation der abgefüllten Rohmasse, unter zumindest zeitweiser Gegenwart von Rauch in einer ersten Stufe,
d. Entfernen der Masse aus den räucherfähigen Behältnissen und Zumischen von Starter- und/oder Schutzkulturen,
e. Abpacken der Masse in Verkaufsverpackungen,
f. Fermentation der Masse in den Verkaufsverpackungen in einer zweiten Stufe bis zu einem fertigen Fermentationsgrad.

2. Verfahren nach Anspruch 1, **dadurch gekennzeichnet, dass** in der ersten Fermentationsstufe in Schritt c. der pH-Wert des Masse bis auf einen Wert von maximal 5,2 und minimal 4,7 abgesenkt wird.

3. Verfahren nach einem der Ansprüche 1 oder 2, **dadurch gekennzeichnet, dass** die erste Fermentationsstufe (Schritt c.) frühestens ab dem 6. Tag der Reifung beendet wird.

4. Verfahren nach einem der vorhergehenden Ansprüche, **dadurch gekennzeichnet, dass** die erste Fermentationsstufe (Schritt c.) zum spätestmöglichen Zeitpunkt, spätestens am 10. Tag der Reifung beendet wird, jedoch nicht später als mit Erreichen eines pH-Wertes der Masse von minimal 4,7.

5. Verfahren nach einem der vorhergehenden Ansprüche, **dadurch gekennzeichnet, dass** die in Schritt d. zugemischten Schutzkulturen kaltwachsende Schutzkulturen sind, die auch bei einer Temperatur unter 10°C, insbesondere auch unter 7°C aktiv sind, und dass die zweite Stufe der Fermentation gemäß Schritt f. während einer Lagerung der in die Verkaufsverpackungen abgefüllten Masse bei einer Temperatur von unter 10°C, insbesondere unter 7°C erfolgt.

6. Verfahren nach einem der vorhergehenden Ansprüche, **dadurch gekennzeichnet, dass** in Schritt d. der Masse neben den Schutzkulturen zusätzlich Fett oder Öl, zugegeben wird.

7. Verfahren nach einem der vorhergehenden Ansprüche, **dadurch gekennzeichnet, dass** in Schritt b. die Rohmasse in Faserdärme als räucherfähige Behältnisse abgepackt wird.

8. Verfahren nach einem der vorhergehenden Ansprüche, **dadurch gekennzeichnet, dass** in Schritt a. eine Rohmasse mit hohem Fettgehalt, d.h. einem Fettgehalt von wenigstens 25 Gew.-%, verwendet wird.

## Claims

1. A method of manufacture of packaged and smoked spreadable raw sausages, in particular smoked tea sausage, comprising the following steps:
a. addition of a crushed raw mass,
b. pouring the raw mass in smoking containers,
c. fermentation of the poured raw mass, with the at least partial presence of smoke in a first step,
d. removing the mass from the smoking containers then addition of starting and/or protective cultures,
e. conditioning the mass in sales packages,
f. fermentation of the mass in the sales packages in a second step until fermentation is complete.

2. A method according to claim 1, **characterised in that** in the first fermentation step in step c. the pH-value of the mass falls in the range between 5.2 maximum and 4.7 minimum.

3. A method according to one of the claims 1 or 2, **characterised in that** the first fermentation step (step c.) is terminated at the earliest as of the 6^{th} maturation day.

4. A method according to any of the preceding claims, **characterised in that** the first fermentation step (step c.) is terminated as late as possible, on the 19^{th} maturation day at the latest, however no later than when the mass reaches a minimum pH-value of 4.7.

5. A method according to any of the preceding claims, **characterised in that** the protective cultures added in step d. are cold-grown protective cultures, which are also active at a temperature below 10°C, in particular also below 7°C, and that the second fermentation phase according to step f. takes place when the mass poured in the sales packages is stored at a temperature below 10°C, in particular below 7°C.

6. A method according to any of the preceding claims, **characterised in that** in step d. more fat or oil is added to the mass on top of the protective cultures.

7. A method according to any of the preceding claims, **characterised in that** in step b. the raw mass is packaged in fibre intestines acting as smoking containers.

8. A method according to any of the preceding claims, **characterised in that** in step a. a raw mass with high fat content, i.e. a fat content of at least 25 weight percent is used.

## Revendications

1. Procédé de fabrication de saucisses crues à tartiner, conditionnées et fumées, en particulier une saucisse fumée au pâté, comprenant les phases suivantes :
a. mélange d'une masse crue concassée,
b. versement de la masse crue dans des contenants de fumage,
c. fermentation de la masse crue versée, en présence au moins temporaire de fumée dans un premier temps,
d. extraction de la masse des contenants de fumage et addition de cultures de départ et/ou de protection,
e. conditionnement de la masse en emballages de vente,
f. fermentation de la dans les emballages de vente dans un second temps jusqu'au terme de la fermentation.

2. Procédé selon la revendication 1, **caractérisé en ce que** pendant la première étape de fermentation à la phase c. la valeur pH de la masse est abaissée dans la fourchette comprise entre 5,2 max. et 4,7 min.

3. Procédé selon l'une des revendications 1 ou 2, **caractérisé en ce que** la première étape de fermentation (phase c.) est terminée au plus tôt le 6^{ème} jour de maturation.

4. Procédé selon l'une quelconque des revendications précédentes, **caractérisé en ce que** la première étape de fermentation (phase c.) est terminée le plus tard possible, au plus tard le 10^{ème} jour de maturation, cependant avant que la value pH de la masse ne tombe au-dessous de 4,7.

5. Procédé selon l'une quelconque des revendications précédentes, **caractérisé en ce** les cultures de protection ajoutées à la phase d. sont des cultures de protection cultivées à froid, qui sont également actives à une température inférieure à 10°C, en particulier également inférieure à 7°C, et que la seconde étape de la fermentation selon la phase f. se produit pendant le stockage de la masse versée dans les emballages de vente à une température inférieure à 10°C, en particulier inférieure à 7°C.

6. Procédé selon l'une quelconque des revendications précédentes, **caractérisé en ce que** l'on ajoute dans la phase d. encore de la graisse ou de l'huile à la masse en plus des cultures de protection.

7. Procédé selon l'une quelconque des revendications précédentes, **caractérisé en ce** dans la phase b. la masse crue est conditionnée dans des boyaux en fibre faisant office de contenants de fumage.

8. Procédé selon l'une quelconque des revendications précédentes, **caractérisé en ce** l'on utilise dans la phase a. une masse crue à forte teneur en graisse, soit une teneur en graisse d'au moins 25 % en poids.
